# EUROPÄISCHE PATENTSCHRIFT

(11) **EP 0 904 215 B1**
(45) Veröffentlichungstag und Bekanntmachung des Hinweises auf die Patenterteilung: **21.05.2003**
(21) Anmeldenummer: 98917040.2
(22) Anmeldetag: 21.03.1998
(51) Int. Cl.: B60N 2/44

(54) **Rückenstütze für Lehnen, insbesondere von Kraftfahrzeugsitzen**
Back support for seat backs, in particular for motor vehicle seats
Appui-dos pour dossiers, notamment dossiers de sièges automobiles

(30) Priorität: 10.04.1997 DE 29706397 U
(43) Veröffentlichungstag der Anmeldung: 31.03.1999
(73) Patentinhaber: MÖLLERTECH S.A., 01470 Amurrio (ES)
(72) Erfinder: VON MÖLLER, Moritz, D-33649 Bielefeld (DE)
(74) Vertreter: Thielking, Bodo, Dipl.-Ing.
(86) Internationale Anmeldenummer: EP9801655
(87) Internationale Veröffentlichungsnummer: WO98045138

(56) Entgegenhaltungen:
- WO-A-95/31918
- DE-A- 4 405 495
- US-A- 4 354 709
- US-A- 4 541 670
- US-A- 4 632 454
- US-A- 4 722 569
- US-A- 5 076 643
- US-A- 5 344 211

## Beschreibung

### TECHNISCHES GEBIET

Die Erfindung betrifft eine Rückenstütze für Lehnen, insbesondere von Kraftfahrzeugsitzen nach dem Oberbegriff des Anspruchs 1.

### STAND DER TECHNIK

Bei einer bekannten derartigen Rückenstütze (US-A-4,632, 454) ist die Stützplatte auf einer lehnenfesten Führungsplatte gelagert. Die Führungsplatte ist einstückig ausgebildet und besitzt an den Seitenkanten der Stützplatte vorgesehene vertikale Langlöcher, in die Gleitelemente der Stützplatte eingreifen. Das Vorsehen einer massiven Führungsplatte kann schon aus Gewichtsgründen nachteilig sein. Außerdem birgt die Führung der Stützplatte ausschließlich benachbart zu den Seitenkanten die Gefahr, daß ein Slip-Stick-Effekt auftritt.

Es sind weiterhin Rückenstützen ähnlicher Art bekannt, bei denen die seitlich beabstandeten Führungselemente an der Lehne befestigte, parallel zueinander gespannte Führungsdrähte sind. Die Montage derartiger Rückenstützen ist aufwendig.

Es ist ferner eine einstellbare Rückenlehne zur Verwendung in erster Linie bei Bürostühlen bekannt (US-A-5,344,211), welche eine zentrale vertikale Stütze mit einer in ihrer Krümmung veränderbaren Feder aufweist, die schmal und hoch ausgebildet ist. Vor der schmalen Feder sitzt eine zusätzliche geformte Stützplatte, an der der Rücken des Benutzers anliegt. Eine derartige Konstruktion ist nicht in einen Kraftfahrzeugsitz integrierbar.

### DIE ERFINDUNG

Der Erfindung liegt die Aufgabe zugrunde, eine Rückenstütze der als bekannt vorausgesetzten Art so auszubilden, daß die gesamte Rückenstütze als fertiges Bauteil einfach in die Rückenlehne einsetzbar ist.

Die Lösung dieser Aufgabe erfolgt mit den Merkmalen des Kennzeichnungsteils des Schutzanspruchs 1.

Bevorzugte Ausgestaltungen der Erfindung sind in den Unteransprüchen beschrieben.

Die erfindungsgemäße Rückenstütze läßt sich in einfacher Weise und preisgünstig herstellen. Sie erlaubt sowohl einen Zusammenbau als auch einen Einbau in die Rückenlehne mit einem vergleichsweise geringen Montageaufwand.

### KURZBESCHREIBUNG DER ZEICHNUNGSABBILDUNG

Nachstehend wird eine bevorzugte Ausführungsform der Erfindung anhand der Zeichnung im einzelnen beschrieben. Es zeigen:

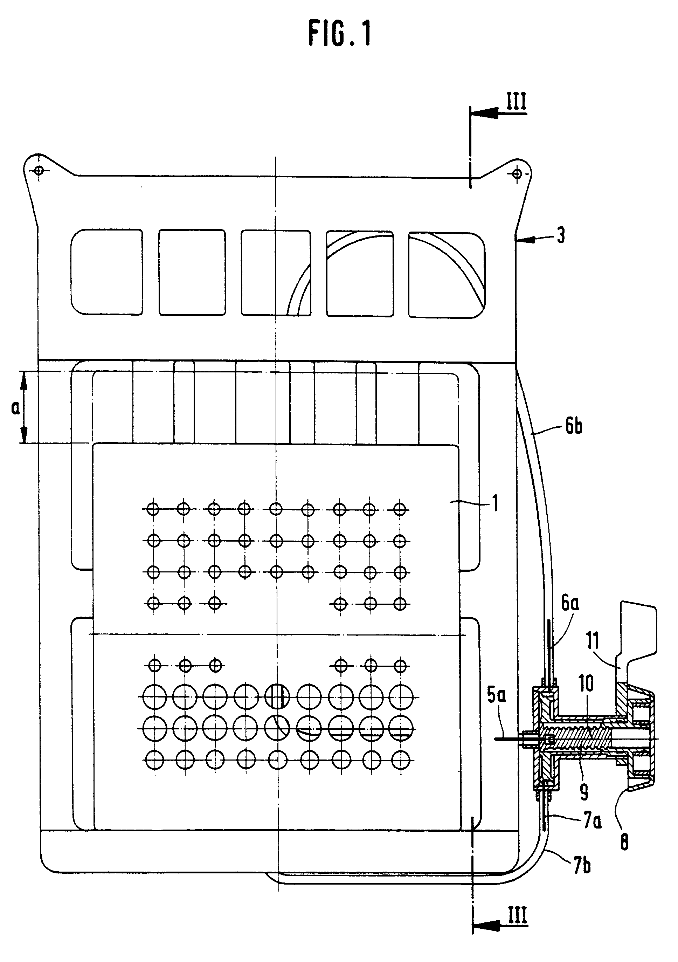

- Figur 1 -: eine Frontalansicht der Rückenstütze mit einer aufgeschnitten dargestellten Betätigungseinrichtung,

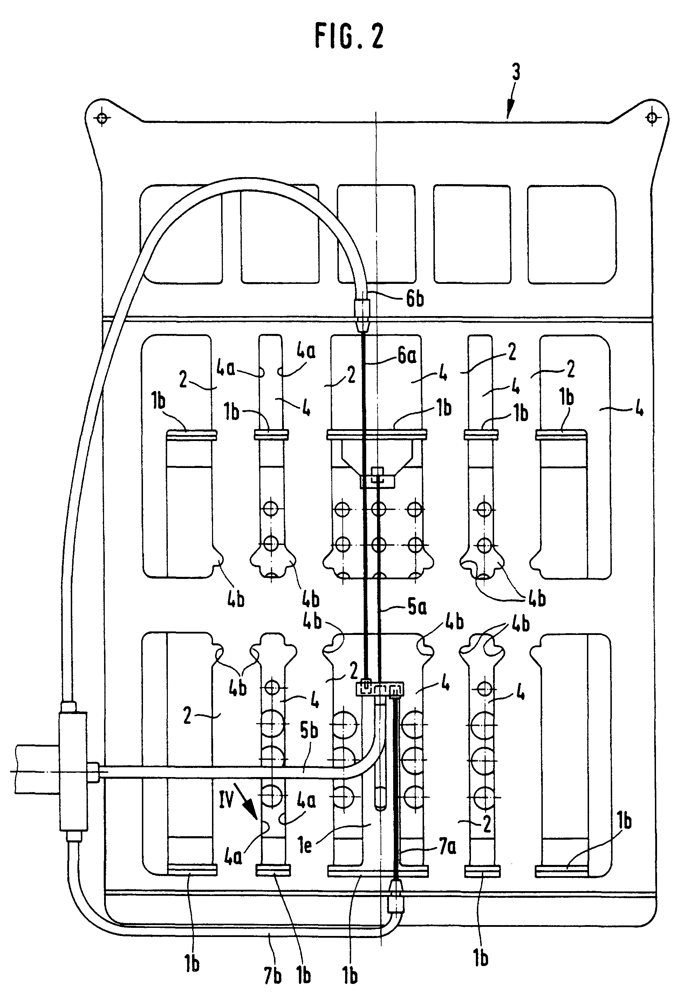

- Figur 2 -: eine Rückansicht der Rückenstütze gemäß Figur 1,
- Figur 3 -: eine vereinfachte Schnittdarstellung gemäß III-III in Figur 1,
- Figur 4 -: ein Detail gemäß IV in Figur 2 in perspektivischer Darstellung.

### BESTER WEG ZUR AUSFÜHRUNG DER ERFINDUNG

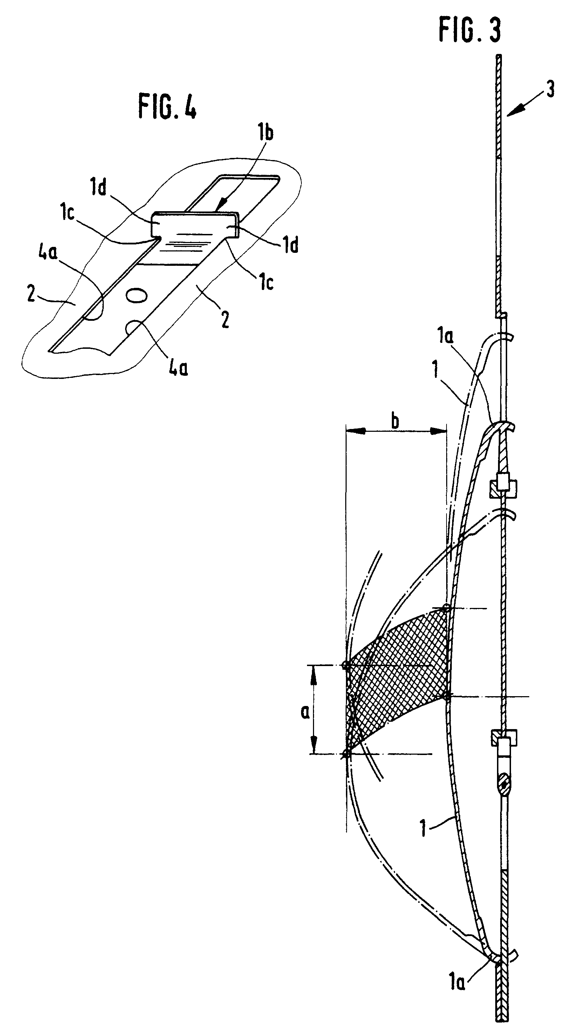

Bei der dargestellten Ausführungsform ist eine Stützplatte 1 sowohl in ihrer Krümmung oder Wölbung verstellbar als auch in der Höhe verschiebbar. Der Höhenverstellweg ist mit a in den Zeichnungsfiguren 1 und 3 dargestellt. Die Verstelltiefe ist mit b in Figur 3 angegeben.

Das der Erfindung zugrundeliegende Prinzip kann auch angewendet werden bei Rückenstützen, deren Stützplatten nicht höhenverstellbar sondern, nur krümmungseinstellbar sind.

Die Stützplatte 1 ist auf sich vertikal erstreckenden Rippen 2 einer einteiligen Führungsplatte 3 geführt. Zwischen den Rippen 2 sind Durchgangsöffnungen 4 vorgesehen, welche an ihren Rändern vertikale Führungskanten 4a besitzen. Die Durchgangsöffnungen 4 werden von endseitigen Laschen 1b der Stützplatte 1 durchsetzt (s. Figur 4). Die Laschen 1b besitzen Einschnürungen lc, welche dem Abstand der Führungskanten benachbarter Rippen 2 entsprechen. Auf der Rückseite der Führungsplatte 3 besitzen die Laschen 1b Verbreiterungen 1d.

Die Führungskanten 4a besitzen außerhalb der Führungsbereiche Einschnitte 4b, die tiefer sind als die Verbreiterungen 1d der die Führungskanten hintergreifenden Laschen 1b. Durch diese Gestaltung ist es möglich, die Laschen bei stark gewölbter Stützplatte in die Durchgangsöffnungen in der Weise einzusetzen, daß die Verbreiterungen die Führungskanten hintergreifen und daß damit die Stützplatte 1 ordnungsgemäß auf der Führungsplatte geführt wird.

Die Krümmungsverstellung der Stützplatte erfolgt mittels eines Bowdenzugs, der aus einer Seele 5a und einer Hülle 5b besteht. Die Seele ist mit einem Ende an der mittleren Lasche 1b befestigt. Die Hülle ist mit einem Ende an einer Lasche 1e befestigt, welche ihrerseits mit der gegenüberliegenden Lasche 1b verbunden ist. Mit dem anderen Ende ist die Seele 5a mit dem Zentrum einer Schraubenspindel 9 verbunden, die über ein Handrad 8, das in seinem Zentrum einen zur Schraubenspindel 9 passenden Mutterbereich aufweist, in Richtung der Achse 10 verschoben werden kann. Hierdurch wandern die horizontalen oberen und unteren Endbereiche 1a und 1b der Stützplatte (s. Fig. 3) mehr oder weniger weit zusammen bzw. auseinander mit der Folge, daß damit die Krümmung verstellt werden kann und die Tiefe der Wölbung sich entsprechend verändert.

Bei der dargestellten Ausführungsform ist nicht nur die Wölbung der Stützplatte 1 verstellbar, sondern auch deren Höhenlage. Die Verstellung der Höhenlage geschieht mit Hilfe eines gleichachsig zur Schraubenspindel 9 gelagerten schwenkbaren Hebels 11, der zwei einander gegenüberliegende Bereiche verdreht, an denen die der Führungsplatte 1 abgewandten Enden von zwei Bowdenzugseelen 6a bzw. 7a befestigt sind. Die Bowdenzugseelen 6a und 7a laufen in Hüllen 6b und 7b. Die Hüllen 6b und 7b beider Bowdenzüge sind mit ihrem vom Verstellmechanismus abgewandten Ende an der Führungsplatte 3 fixiert. Die vom Betätigungsmechanismus abgewandten Enden der Seelen 6a und 7a sind an der der Stützplatte 1 befestigt. Dabei greifen diese Enden an der vertikalen Lasche 1e an, an der auch die Hülle 5b des Bowdenzugs für die Krümmungsverstellung befestigt ist.

## Patentansprüche

1. Rückenstütze für Lehnen, insbesondere von Kraftfahrzeugsitzen, mit einer vorwärts gekrümmten und in ihrer Krümmung einstellbaren Stützplatte (1), die horizontale Endbereiche (1a) aufweist, welche auf lehnenfesten, zueinander parallelen, seitlich beabstandeten Führungselementen einer lehnenfesten Führungsplatte (3) vertikal verschieblich gelagert sind, welche Durchgangsöffnungen (4) aufweist, die zueinander parallele, vertikale Führungskanten (4a) besitzen,
**dadurch gekennzeichnet,**
**daß** die Führungselemente aus Rippen (2) bestehen, und die Durchgangsöffnungen (4) von endseitigen Laschen (1b) der Stützplatte (1) von der Frontseite her durchsetzt sind, wobei die Laschen (1b) dem Abstand der Führungskanten (4a) entsprechende Einschnürungen (1c) aufweisen und sich auf der Rückseite der Führungsplatte (3) wieder verbreitern.

2. Rückenstütze nach Anspruch 1,
**dadurch gekennzeichnet,**
**daß** beide Endbereiche (1a) der Stützplatte (1) jeweils die Öffnungen durchsetzende Laschen (1b) aufweisen, die dem Abstand der beiden Führungskanten (4a) einer Rippe (4) entsprechende Einschnürungen (1c) und auf der Rückseite der Führungsplatte (3) vorgesehene Verbreiterungen (1d) besitzen, derart, daß die Stützplatte (1) höhenverschiebbar auf der Führungsplatte (3) gelagert ist.

3. Rückenstütze nach Anspruch 1 oder 2,
**dadurch gekennzeichnet,**
**daß** die einander gegenüberliegenden Führungskanten (4a) benachbarter Rippen (2) außerhalb des Führungsbereichs Einschnitte (4b) aufweisen, die tiefer sind als die Verbreiterungen (1d) der die Führungskanten hintergreifenden Laschen (1b).

4. Rückenstütze nach einem oder mehreren der Ansprüche 1 bis 3,
**dadurch gekennzeichnet,**
**daß** die Laschen (1b) einstückig an die aus Kunststoff bestehende Stützplatte (1) angeformt sind.

5. Rückenstütze nach einem oder mehreren der Ansprüche 1 bis 4,
**dadurch gekennzeichnet,**
**daß** die Führungsplatte (3) aus Kunststoff besteht.

6. Rückenstütze nach einem oder mehreren der Ansprüche 1 bis 5,
**dadurch gekennzeichnet,**
**daß** die Krümmung mittels eines Bowdenzugs (5a, 5b) verstellbar ist, dessen Hülle (5b) fest mit einem Ende der Stützplatte (1) und dessen Seele (5a) fest mit dem anderen Ende der Stützplatte (1) verbunden ist.

7. Rückenstütze nach Anspruch 6,
**dadurch gekennzeichnet,**
**daß** die Hülle (5b) über eine am zugehörigen Ende befestigte vertikale Lasche (1e) fest mit der Stützplatte (1) verbunden ist.

8. Rückenstütze nach einem oder mehreren der Ansprüche 1 bis 7,
**dadurch gekennzeichnet,**
**daß** die Stützplatte (1) mittels zweier gegensinnig wirkender Bowdenzüge (6a, 6b; 7a, 7b) höhenverfahrbar ist.

9. Rückenstütze nach Anspruch 8,
**dadurch gekennzeichnet,**
**daß** die Hüllen (6b, 7b) beider Bowdenzüge an der Führungsplatte (3) fixiert sind und die Seelen (6a, 7a) an der Stützplatte (1).

10. Rückenstütze nach Anspruch 9,
**dadurch gekennzeichnet,**
**daß** die Seelen (6a, 7a) an der vertikalen Lasche (1e) befestigt sind, an der auch die Hülle (5b) des Bowdenzugs für die Krümmungsverstellung befestigt ist.

11. Rückenstütze nach einem oder mehreren der Ansprüche 1 bis 10,
**dadurch gekennzeichnet,**
**daß** die Betätigung des Bowdenzugs (5a, 5b) für die Krümmungsverstellung mittels einer durch ein drehbares Handrad (8) längsverschieblichen Schraubspindel (9) erfolgt, welche das der Befestigungsstelle an der Stützplatte abgewandte Ende der Seele beim Drehen in Richtung der Drehachse (10) verschiebt.

12. Rückenstütze nach einem oder mehreren der Ansprüche 1 bis 11,
**dadurch gekennzeichnet,**
**daß** die Verstellung der beiden Bowdenzüge (6a, 6b; 7a, 7b) für die Höhenverstellung der Stützplatte (1) über einen gleichachsig zur Schraubenspindel gelagerten schwenkbaren Hebel (11) erfolgt, der zwei einander gegenüberliegende Bereiche verdreht, an denen die der Führungsplatte abgewandten Enden der Bowdenzugseelen (6a; 7a) befestigt ist.

## Claims

1. Back support for backrests, in particular of motor vehicles, with a support plate (1) curved forwards which can be adjusted in its curvature and has horizontal end areas (1a) which are mounted in a vertically displaceable way on laterally spaced apart guide elements, parallel to each other, of a guide plate (3) of a fixed backrest wherein this guide plate (3) has passage openings (4) which have vertical guide edges (4a) parallel to each other,
**characterised in that**
the guide elements consist of ribs (2) and end-side tabs (1b) of the support plate (1) go through the passage openings (4) from the front side wherein the tabs have neck formations (1c) corresponding to the distance of the guide edges (4a) and widen again on the rear side of the guide plate (3).

2. Back support according to claim 1
**characterised in that**
the two end areas (1a) of the support plate (1) respectively have tabs (1b) going through the openings wherein these tabs (1b) have neck formations (1c) corresponding to the distance of the two guide edges (4a) of a rib (4) and widened areas (1d) provided on the rear side of the guide plate (3) in such a way that the support plate (1) is mounted in a height displaceable way on the guide plate (3).

3. Back support according to claim 1 or 2
**characterised in that**
the guide edges (4a) lying opposite each other of adjacent ribs (2) have indentations (4b) outside of the guide area which are deeper than the widened areas (1d) of the tabs (1b) engaging behind the guide edges.

4. Back support according to one or several of the claims 1 to 3
**characterised in that**
the tabs (1b) are formed as one component on the support plate (1) consisting of synthetic material.

5. Back support according to one or several of the claims 1 to 4
**characterised in that**
the guide plate (3) consists of synthetic material.

6. Back support according to one or several of the claims 1 to 5
**characterised in that**
the curvature can be adjusted by means of a Bowden cable (5a, 5b) whose casing is securely connected with one end of the support plate (1) and whose core (5a) is securely connected with the other end of the support plate (1).

7. Back support according to claim 6
**characterised in that**
the casing (5b)is connected by means of a vertical tab (1e) secured to the associated end securely with the support plate (1).

8. Back support according to one or several of the claims 1 to 7
**characterised in that**
the support plate (1) can be moved in height by means of two Bowden cables (6a, 6b; 7a, 7b) working in opposite directions.

9. Back support according to claim 8
**characterised in that**
the casing components (6b, 7b) of the two Bowden cables are fixed on the guide plate (3) and the cores (6a, 7a) on the support plate (1).

10. Back support according to claim 9
**characterised in that**
the cores (6a, 7a) are secured to the vertical tab (1e), to which the casing (5b) of the Bowden cable for the curvature adjustment is also secured.

11. Back support according to one or several of the claims 1 to 10
**characterised in that**
the activation of the Bowden cable (5a, 5b) for the curvature adjustment takes place by means of a screw spindle longitudinally displaceable through a rotatable hand wheel (8) wherein this screw spindle displaces the end of the core turned away from the securing point to the support plate upon rotation in the direction of the rotation axis (10).

12. Back support according to one or several of the claims 1 to 11
**characterised in that**
the adjustment of the two Bowden cables (6a, 6b; 7a, 7b) for the height adjustment of the support plate (1) takes place by means of a swivel lever (11) mounted on the same axle as the screw spindle and which rotates two opposite-lying areas, to which the ends of the Bowden cable cores (6a; 7a) turned away from the guide plate are secured.

## Revendications

1. Appui-dos pour dossier, notamment de sièges pour véhicules automobiles, avec une plaque d'appui (1), courbée en avant et réglable quant à sa cambrure, laquelle présente des zones d'extrémité horizontales (1a) qui, montées, déplaçables verticalement, sur des éléments de guidage d'une plaque de guidage (3) solidaire du dossier, s'étendent parallèlement, distancés latéralement les uns des autres, la plaque de guidage (3) présentant des ouvertures de passage (4) qui sont pourvues des bords de guidage (4a) parallèles, verticaux,
**caractérisé en ce que**
les éléments de guidage consistent en nervures (2) et que les ouvertures de passage (4) sont entrecoupées par des languettes d'extrémité (1b) de la plaque d'appui (1), à partir du côté frontal, les languettes (1b) présentant des rétrécissements (1c), qui correspondent à l'intervalle entre les bords de guidage (4a), et s'élargissant, de nouveau, sur le côté arrière de la plaque de guidage (3).

2. Appui-dos selon la revendication 1,
**caractérisé en ce que**
les deux zones d'extrémité (1a) de la plaque d'appui (1) sont équipées, chacune, de languettes (1b) qui entrecoupent les ouvertures et présentent des rétrécissements (1c), qui correspondent à la distance entre les deux bords de guidage (4a) d'une nervure (4), et des élargissement (1d) sur le côté arrière de la plaque de guidage (3, de sorte que la plaque d'appui (1) se trouve montée, déplaçable dans le sens de la hauteur, sur la plaque de guidage (3).

3. Appui-dos selon la revendication 1 ou 2,
**caractérisé en ce que**
les bords de guidage (4a) de nervures avoisinantes (2), situés vis-à-vis l'un de l'autre, présentent, en dehors de la zone de guidage, des encoches (4b) dont la profondeur est supérieure aux élargissements (1d) des languettes (1b) qui agrippent les bords de guidage.

4. Appui-dos selon l'une ou plusieurs des revendications 1 à 3,
**caractérisé en ce que**
les languettes (1b) sont formées d'une seule pièce à partir de la plaque d'appui (1) en matière plastique.

5. Appui-dos selon l'une ou plusieurs des revendications 1 à 4,
**caractérisé en ce que**
la plaque de guidage (3) est exécutée en matière plastique.

6. Appui-dos selon l'une ou plusieurs des revendications 1 à 5,
**caractérisé en ce que**
la courbure peut être réglée à l'aide d'un câble Bowden (5a, 5b) dont la gaine (5b) est reliée fixement à une extrémité de la plaque d'appui (1) tandis que l'âme (5a) est reliée fixement à l'autre extrémité de la plaque d'appui (1).

7. Appui-dos selon la revendication 6,
**caractérisé en ce que**
la gaine (5b) est reliée fixement à la plaque d'appui (1), par l'intermédiaire d'une languette verticale (le) qui est fixée à l'extrémité afférente.

8. Appui-dos selon l'une ou plusieurs des revendications 1 à 7,
**caractérisé en ce que**
la plaque d'appui (1) peut être déplacée dans le sens de la hauteur à l'aide de deux câbles Bowden (6a, 6b ; 7a, 7b) qui agissent en corrélation inverse.

9. Appui-dos selon la revendication 8,
**caractérisé en ce que**
les gaines (6b, 7b) des deux câbles Bowden sont fixés à la plaque de guidage (3)et les âmes (6a, 7a) à la plaque d'appui (1).

10. Appui-dos selon la revendication 9,
**caractérisé en ce que**
les âmes (6a, 7a) sont fixées à la languette verticale (le), à laquelle la gaine (5b) du câble Bowden, qui règle la courbure, est également fixée.

11. Appui-dos selon l'une ou plusieurs des revendications 1 à 10,
**caractérisé en ce que**
l'actionnement du câble Bowden (5a, 5b) pour le réglage de la courbure s'effectue par l'intermédiaire d'une broche hélicoïdale (9) qui, mue dans le sens de la longueur à l'aide d'un volant à main (8), déplace l'extrémité de l'âme orientée à l'opposé de la plaque d'appui, lors du pivotement dans le sens de l'axe de rotation (10).

12. Appui-dos selon l'une ou plusieurs des revendications 1 à 11,
**caractérisé en ce que**
le réglage des deux câbles Bowden /(6a, 6b ; 7a, 7b) servant au réglage en hauteur de la plaque d'appui (1) s'effectue par l'intermédiaire d'un levier pivotant (11) qui, monté équiaxe par rapport à la broche hélicoïdale, fait pivoter deux zones situées vis-à-vis l'une de l'autre, auxquelles sont fixées les extrémités des âmes (6a, 7a) de câble Bowden orientées à l'opposé de la plaque de guidage.
